# EUROPÄISCHE PATENTSCHRIFT

(11) **EP 0 762 784 B1**
(45) Veröffentlichungstag und Bekanntmachung des Hinweises auf die Patenterteilung: **09.07.2003**
(21) Anmeldenummer: 96113213.1
(22) Anmeldetag: 17.08.1996
(51) Int. Cl.: H04Q 3/00, H04M 3/42

(54) **Verfahren zur Bereitstellung von Nachrichten zur Teilnehmerinformation für Dienste in einem Kommunikationsnetz**
Method for providing subscriber information data for telecommunications network services
Procédé pour fournir des données d'abonnés pour des services dans un réseau de télécommunications

(30) Priorität: 02.09.1995 DE 19532490
(43) Veröffentlichungstag der Anmeldung: 12.03.1997
(73) Patentinhaber: ALCATEL, 75008 Paris (FR)
(72) Erfinder: Lautenschlager, Wolfgang, 71287 Weissach-Flacht (DE)
(74) Vertreter: Knecht, Ulrich Karl, Dipl.-Ing.

(56) Entgegenhaltungen:
- EP-A- 0 549 126
- US-A- 5 418 844
- HALL H M ET AL: "THE AT&T SERVICE CIRCUIT NODE: A NEW ELEMENT FOR PROVIDING INTELLIGENT NETWORK SERVICES" AT & T TECHNICAL JOURNAL,US,AMERICAN TELEPHONE AND TELEGRAPH CO. NEW YORK, Bd. 70, Nr. 3 / 04, Seite 72-84 XP000271089 ISSN: 8756-2324

## Beschreibung

Die Erfindung betrifft ein Verfahren zur Bereitstellung von Nachrichten zur Teilnehmerinformation für Dienste eines Kommunikationsnetzes nach dem Oberbegriff von Anspruch 1 sowie eine Dienststeuereinrichtung, ein Dienstunterstützungssystem, eine Dienstzugangseinrichtung, eine Dienstvermittlungsstelle und ein Dienstesystem nach dem Oberbegriff von Anspruch 7, 8, 9, 10 bzw. 11.

Den Teilnehmern eines Kommunikationsnetzes werden in zunehmenden Maße Dienste in diesem Kommunikationsnetz angeboten, beispielsweise der Dienst "Service 130" oder "Kiosk-Dienste". Die Erfindung geht nun von der Realisierung von Sprachansagen für solche Dienste in der heute üblichen IN-Architektur (IN=Intelligent Network) aus.

Diese Realisierung wird beispielsweise in dem Artikel "Voice services on the intelligent network: intelligent peripherals and service nodes" von F. Bosco beschrieben, der in der Zeitschrift CSELT Technical reports, Vol. XX, No.4, August 1992 auf den Seiten 347 bis 352 erschienen ist.

US 5 418 844 beschreibt weiter ein System, mittels dem ein Teilnehmer eines Fernsprechnetzes auf einfach zu merkende Art und Weise Zugriff auf eine Vielzahl von Informationsdiensten erlangen kann. Solche Informationsdienste können Informationen in Form von Sprache, Daten, Fax oder Video an den Teilnehmer übermitteln.

Der Teilnehmer wählt mittels einer Dienstrufnummer einen IN Dienst an. Ein Sprachmenü bietet dem Teilnehmer nun mehrere Informationsdienste an. Die Sprachnachrichten für das Sprachmenü können hierbei von einer separaten Nachrichtenplattform erzeugt werden, die Sprachansagen auf ein Kommando von der Dienststeuereinrichtung mittels eines Text-zu-Sprach Synthesizers erzeugt. Durch Eingabe eines dreistelligen Zugangscodes kann der Teilnehmer einen der angebotenen Informationsdienste auswählen. Ist die Auswahl erfolgt, so veranlaßt die Dienststeuereinrichtung den Aufbau einer Verbindung zwischen dem Endgerät des Teilnehmers und dem System, mittels dem der ausgewählte Informationsdienst bereitgestellt wird.

Ein zentraler Dienststeuerpunkt (Service Control Point) ist mit einer Vielzahl von Dienstvermittlungspunkten (Service Switching Points) verbunden, die jeweils mittels eines Dienstunterstützungssystems Sprachansagen bereitstellen. Die Dienstelogik für die verschiedenen Dienste ist in dem Dienststeuerpunkt installiert. Die Dienstvermittlungsstellen sind für das Erkennen einer Dienstanforderung und für das Schalten von Verbindungen für Dienste verantwortlich. In jedem der Dienstunterstützungssysteme sind sämtliche Sprachansagen für sämtliche Dienste in kodierter Form abgespeichert.

Um eine Sprachansage zu einem Teilnehmer zu senden, sendet die Dienstelogik eines Dienstes vom Dienststeuerpunkt eine Anforderungsnachricht an das entsprechende Dienstunterstützungssystem. Die Sprachansage wird sodann in dem Dienstunterstützungssystem erzeugt und über einen Nutzkanal des Kommunikationsnetzes an den Teilnehmer gesendet. Weiter sind die Dienstunterstützungssysteme über eine X.25 Schnittstelle mit einem Management-System verbunden, das der Verwaltung der Dienstunterstützungssysteme dient und mittels dem die in diesen abgespeicherten Ansagen geändert und neue Ansagen installiert werden können.

Bei einer größeren Zahl von in dem Kommunikationsnetz angebotener Dienste können sich bei dieser Art der Erzeugung von Sprachansagen Probleme ergeben. Zum einen müssen sämtliche Änderungen von Sprachansagen und jedliche Neueinrichtung von Sprachansagen jeweils mittels des Managementsystems in allen Dienstunterstützungssystemen vorgenommen werden. Dies ist sehr aufwendig. Zum anderen wird bei einer großen Zahl von Sprachansagen viel Speicherplatz in den Dienstunterstützungssystemen benötigt, so daß Sprachansagen für spezielle Dienste nur auf einigen wenigen Dienstunterstützungssystemen installiert werden können.

Der Erfindung liegt nun die Aufgabe zugrunde, Nachrichten zur Teilnehmerinformation für Dienste eines Kommunikationsnetzes bereitzustellen.

Die Aufgabe wird gelöst durch ein Verfahren zur Bereitstellung von Nachrichten zur Teilnehmerinformation für Dienste eines Kommunikationsnetzes nach der Lehre von Anspruch 1 sowie durch eine Dienststeuereinrichtung, ein Dienstunterstützungssystem, eine Dienstzugangseinrichtung eine Dienstvermittlungsstelle und ein Dienstesystem nach der Lehre von Anspruch 6,7,8,9 bzw 10.

Nachrichten zur Teilnehmerinformation, die oft auch als Ansagen bezeichnet werden, sind hierbei beispielsweise Sprachansagen zur Ausgabe von Nachrichten in Form von künstlich erzeugter Sprache oder Ansagetexte zur Ausgabe von Nachrichten in Form von auf einem Display eines Endgerätes dargestellten Texten. Nachrichten zur Teilnehmerinformation können aber auch alle sonstigen analogen oder digitalen Nachrichten sein, die von einem Dienst an einen Teilnehmer gesendet werden. Solche Nachrichten können beispielsweise auch aus Bildern, Musik oder Videoaufzeichnungen bestehen.

Die Grundidee der Erfindung ist, Nachrichten zur Teilnehmerinformation für Dienste zentral durch den Dienststeuerpunkt zu verwalten und sie erst bei Bedarf von dem Dienststeuerpunkt in das entsprechende Dienstunterstützungssystem zu laden.

Es ergibt sich der Vorteil, daß die Nachrichten zur Teilnehmerinformation zentral gespeichert sind und so Änderungen und Neueinrichtung von Nachrichten zur Teilnehmerinformation besonders einfach vorgenommen werden können. Desweiteren ist die Anzahl der verwendbaren Nachrichten zur Teilnehmerinformation allein durch die Speicherkapazität im Dienststeuerpunkt begrenzt. Die Speicherkapazitäten in den Dienstunterstützungssystemen können so reduziert werden und es ist so insgesamt weniger Speicherkapazität notwendig.

Vorteilhafte Ausgestaltungen der Erfindung sind den Unteransprüchen zu entnehmen.

Insbesondere ist es vorteilhaft, die Nachrichten zur Teilnehmerinformation direkt bei der zugehörigen Dienstelogik zu speichern. Dadurch unterliegen die Nachrichten zur Teilnehmerinformation dem Zugriff des Anbieters des jeweiligen Dienstes und können von diesem so selbständig für alle Dienstunterstützungssysteme zentral in dem Dienststeuerpunkt geändert und neueingerichtet werden. Mit Laden einer Nachricht zur Teilnehmerinformation stehen diese somit automatisch in allen Dienstunterstützungssystemen zur Verfügung. Dies ermöglicht insbesondere bei einer großen Zahl von unterschiedlichen Dienstanbietern eine erhebliche Flexibilisierung.

Im folgenden wird die Erfindung anhand eines Ausführungsbeispiels unter Zuhilfenahme beiliegender Zeichnungen näher erläutert.
Fig. 1 zeigt eine symbolische Darstellung eines Kommunikationsnetzes und eines erfindungsgemäßen Dienstesystems.
Fig. 2 zeigt ein detailiertes Blockschaltbild eines Ausschnittes des erfindungsgemäßen Dienstesystems nach Fig. 1

In dem Ausführungsbeispiel wird die Ausführung des erfindungsgemäßen Verfahrens zur Bereitstellung von Nachrichten zur Teilnehmerinformation für Dienste in einem Dienstesystem aufgezeigt, das aus mehreren erfindungsgemäßen Dienststeuereinrichtungen und Dienstzugangseinrichtungen besteht, die ein erfindungsgemäßes Dienstunterstützungssystem enthalten.

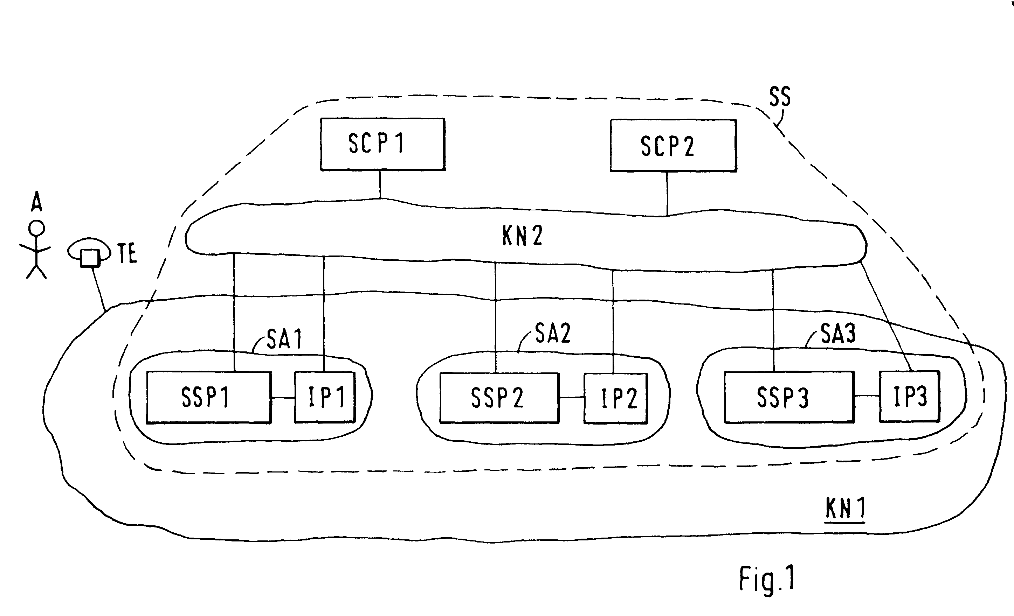

Fig. 1 zeigt zwei Dienststeuereinrichtungen SCP1 und SCP2, zwei Kommunikationsnetze KN1 und KN2, drei Dienstvermittlungsstellen SSP1 bis SSP3, drei Dienstunterstützungssysteme IP1 bis IP3, einen Teilnehmer A und ein Endgerät TE.

Die Dienstvermittlungsstellen SSP1 bis SSP3 sind mit den Dienstunterstützungssystemen IP1, IP2 bzw. IP3 verbunden und bilden mit diesen zusammen jeweils eine Dienstzugangseinrichtung SA1, SA2 bzw. SA3. Die Dienststeuereinrichtungen SCP1 und SCP2 sind über das Kommunikationsnetz KN2 mit den Dienstvermittlungsstellen SSP1 bis SSP3 und den Dienstunterstützungssystemen IP1 bis IP3 verbunden. All diese Einrichtungen zusammen bilden ein Dienstesystem SS. Das Endgerät TE ist dem Teilnehmer A zugeordnet und mit dem Kommunikationsnetz KN1 verbunden.

Das Kommunikationsnetz KN1 ist wie das übliche Fernsprechnetz ausgestaltet und enthält so auch mehrere Vermittlungsstellen. Von diesen Vermittlungsstellen sind die in Fig. 1 gezeigten Dienstvermittlungsstellen SSP1 bis SSP3 besonders ausgestaltet. Sie übermitteln beim Auftreten von Verbindungswünschen mit bestimmten Dienstkennungen über das Kommunikationsnetz KN2 Anfragen an die Dienststeuereinrichtung SCP1 oder SCP2 und erhalten darauf Anweisungen, die die weitere Behandlung der Verbindungswünsche betreffen. Bei einer solchen Dienstkennung handelt es sich gewöhnlich um eine bestimmte Ausscheidenummer, mittels der ein den Verbindungswunsch absendender Teilnehmer einen gewünschten Dienst spezifiziert. Die Anfragen werden hierbei von den Dienstvermittlungsstellen SSP1 bis SSP3 an diejenige der Dienststeuereinrichtungen SCP1 und SCP2 gerichtet, die als Dienststeuerpunkt für den jeweils mittels der Ausscheidenummer spezifizierten Dienst fungiert.

Es ist auch möglich, daß das Kommunikationsnetz KN1 aus mehreren untereinander verbundenen Unternetzen gebildet wird. Solche Unternetze können beispielsweise die Netze unterschiedlicher Netzbetreiber, private, öffentliche oder Mobilfunknetze sein.

Weiter ist es möglich, daß eine andere Anzahl von Vermittlungsstellen des Kommunikationsnetzes KN1 wie die Vermittlungsstellen SSP1 bis SSP3 ausgestaltet ist. Die Dienstunterstützungssysteme IP1 bis IP3 werden von den Dienststeuereinrichtungen SCP1 und SCP2 gesteuert. Weiter verfügen sie für die Kommunikation mit Teilnehmern des Kommunikationsnetzes KN1 jeweils über mindestens eine Nutzkanal- oder Zeichengabe-Schnittstelle zu den Dienstvermittlungsstellen SSP1, SSP2 bzw. SSP3. Ihre Aufgabe ist es, die Dienststeuereinrichtungen SCP1 und SCP2 bei der Kommunikation mit den Endgeräten des Kommunikationsnetzes KN1 zu unterstützen. Sie stellen Funktionen zum Empfang von Nachrichten von Teilnehmern, beispielsweise Tastwahl-Empfänger oder Spracherkennungseinrichtungen, und zum Senden von Nachrichten an Teilnehmer bereit, beispielsweise zum Senden von Sprachansagen oder Ansagetexte. Die genaue Beschreibung der Funktionsweise eines solchen Dienstunterstützungssystems kann beispielsweise dem oben angeführten Artikel "Voice services on the intelligent network: intelligent peripherals and service nodes" entnommen werden.

Es ist auch möglich, daß die Dienstunterstützungssysteme über die Dienstvermittlungsstellen von den Dienststeuereinrichtungen gesteuert werden.

Es ist auch möglich, daß die Funktionen des Dienstunterstützungssystems in die jeweilige der Dienstvermittlungsstellen SSP1 bis SSP3 integriert sind. Es würde sich so um ein integriertes Dienstunterstützungssystem handeln und eine Dienstzugangseinrichtung würde von einer Dienstvermittlungsstelle mit solch einem integrierten Dienstunterstützungssystem gebildet.

Bei dem Kommunikationsnetz KN2 handelt es sich um ein Zeichengabenetz nach CCITT Nr. 7. Für das Kommunikationsnetz KN2 können auch beliebige andere Datennetze verwendet werden. Besonders vorteilhaft ist es hierbei, ein Kommunikationsnetz auf der Grundlage eines ATM-Netzes (ATM = Asynchronous Transfer Mode) zu verwenden, da mittels eines solche Netzes große Datenmengen in kurzer Zeit übertragen werden können.

Die Dienststeuereinrichtungen SCP1 und SCP2 bestehen jeweils aus einem oder mehreren miteinander verbundenen Rechnern und peripheren Komponenten, die insbesondere eine Datenkommunikation mit den Dienstvermittlungsstellen SSP1 bis SSP3 und Dienstunterstützungssystemen IP1 bis IP3 ermöglicht. Auf dieser
Hardware-Pattform laufen Steuerprogramme ab, die die Funktionen eines Dienststeuerpunktes erbringen. Sie erfüllen so insbesondere die Funktionen einer Dienstelogik für ein oder mehrere Dienste, d. h. sie steuern die Erbringung dieser Dienste. Darüberhinaus verwalten sie die von diesen Diensten verwendeten Sprachansagen und Ansagetexte. Die genaue Funktionsweise der Dienststeuereinrichtungen SCP1 und SCP2 kann beispielsweise dem Artikel "Eigenschaften intelligenter Netze", Elektrisches Nachrichtenwesen, Band 63, Nummer 4, 1989, S. 314 bis 319, von L. Alvarez Mazo et al entnommen werden.

Es ist möglich, daß das Dienstsystem SS über eine andere Anzahl von Dienststeuereinrichtungen verfügt.

Um einen im Kommunikationsnetz KN1 angebotenen Dienst in Anspruch zu nehmen, wählt der Teilnehmer A mittels seines Endgerätes TE die Dienstkennung dieses Dienstes. Ein Verbindungswunsch mit dieser Dienstkennung als Rufnummer wird durch das Kommunikationsnetz KN1 geleitet und beispielsweise von der Dienstvermittlungsstelle SSP1 als Dienst-Anforderung erkannt. Die Dienstvermittlungstelle SSP1 sendet sodann über das Kommunikationsnetz KN2 eine Nachricht an diejenige Dienststeuereinrichtung, die für die Erbringung des in dem Verbindungswunsch spezifizierten Dienstes verantwortlich ist.

Die Dienst-Anforderung durch den Teilnehmer A kann auch auf andere Weise erfolgen. Beispielsweise werden die Verbindungswünsche des Teilnehmers A aufgrund seiner Teilnehmerkennung automatisch zu einer Dienstvermittlungstelle geleitet und von dort automatisch ein bestimmter Dienst getriggert.

Weiter ist es möglich, daß der Verbindungswunsch von einer Dienstvermittlungsstelle, die über kein Dienstunterstützungssystem verfügt zu solch einer Dienstvermittlungsstelle weitergeleitet wird, die über eines verfügt. Eine Dienstzugangseinrichtung würde dann aus diesen Dienstvermittlungsstellen und dem Dienstunterstützungssystem bestehen.

Beim Empfang dieser Nachricht wird in dieser Dienststeuereinrichtung, beispielsweise der Dienststeuereinrichtung SCP1, die diesem Dienst zugeordnete Dienstelogik aktiviert. Daneben lädt die Diensteuereinrichtung SCP1 alle diesem Dienst zugeordneten Sprachansagen und Ansagetexte, d. h. alle Sprachansagen und Ansagetexte, auf die der Dienst bei seiner Ausführung zugreifen kann, in das Dienstunterstützungssystem IP1, wo sie abgespeichert werden.

Wenn nun während der Erbringung des Dienstes Sprachansagen oder Ansagetexte an den Teilnehmer A gesendet werden sollen, so sendet die Dienststeuereinrichtung über das Kommunikationsnetz KN2 eine entsprechende Anforderungsnachricht an das Dienstunterstützungssystem IP1. Auf diese Anforderungsnachricht sendet das Dienstunterstützungssystem die entsprechende Sprachansage oder den entsprechenden Ansagetext über das Kommunikationsnetz KN1 an das Endgerät TE. Ist die Erbringung des Dienstes beendet, so wird von der Dienststeuereinrichtung SCP1 eine entsprechende Nachricht an das Dienstunterstützungssystem IP1 gesendet, worauf dieses die geladenen Sprachansagen und Ansagetexte aus seinem Speicher löscht.

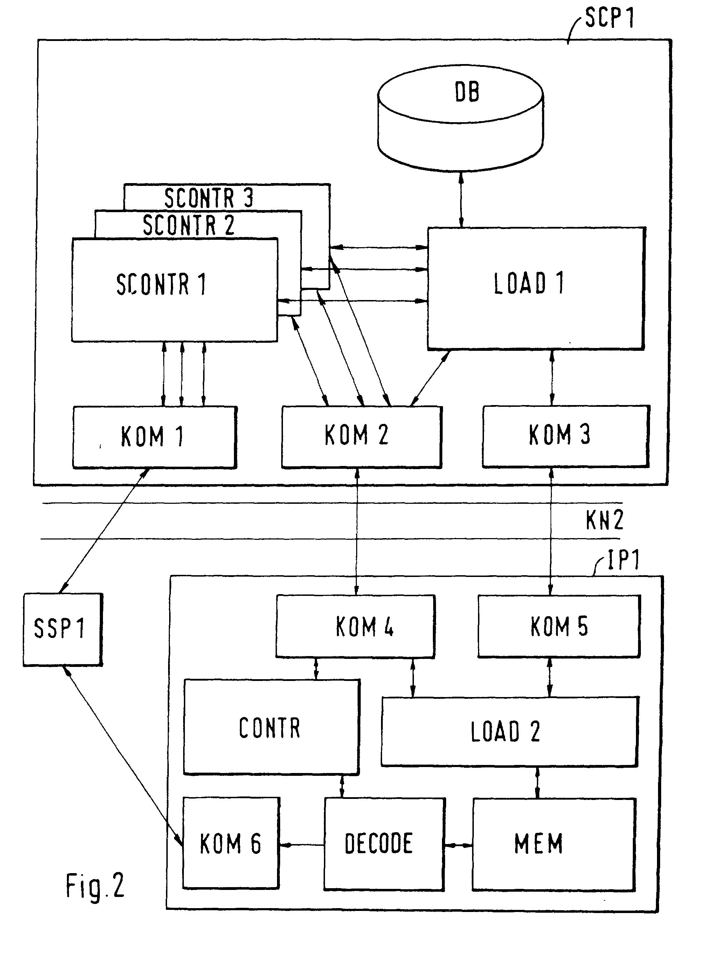

Im folgenden wird die Bereitstellung von Ansagen anhand von Fig. 2 genauer beschrieben:

Fig. 2 zeigt einen Ausschnitt aus dem Dienstesystem SS mit der Dienststeuereinrichtung SCP1, dem Dienstunterstützungssystem IP1 und der Dienstvermittlungsstelle SSP1. Die Dienststeuereinrichtung SCP1 tauscht mit der Dienstvermittlungsstelle SSP1 und dem Dienstunterstützungssystem IP1 Daten über das Kommunikationsnetz KN2 aus. Die Dienstvermittlungsstelle SSP1 und das Dienstunterstützungssystem IP1 tauschen untereinander Daten aus.

Die Dienststeuereinrichtung SCP1 weist eine Datenbasis DB, eine Ladesteuerung LOAD1, drei Kommunikationseinrichtungen KOM1 bis KOM3 und drei Dienstelogika SCONTR1 bis SCONTR3 auf.

Die Ladesteuerung LOAD1 tauscht Daten mit der Datenbasis DB, den Dienstelogika SCONTR1 bis SCONTR3 und den Kommunikationseinrichtungen KOM2 und KOM3 aus. Die Dienstelogika SCONTR1 bis SCONTR3 tauschen jeweils Daten mit den Kommunikationseinrichtungen KOM1 und KOM2 aus. Die Kommunikationseinrichtung KOM1 tauscht Daten mit der Dienstvermittlungsstelle SSP1 und den Dienstelogika SCONTR1 bis SCONTR3 und die Kommunikationseinrichtungen KOM2 und KOM3 tauschen Daten mit dem Dienstunterstützungssystem IP1 aus.

Die Kommunikationseinrichtungen KOM1 und KOM2 stellen die für den Austausch von Nachrichten mit der Dienstvermittlungsstelle SSP1 bzw. dem Dienstunterstützungssystem IP1 notwendigen Kommunikationsdienste zur Verfügung. Diese Kommunikation basiert auf einem Signalisierungsnetz nach dem Protokoll Nr. 7 der CCITT, auf dem das INAP-Protokoll (INAP=Intelligent Network Applikation Protokoll) aufsetzt. Die hierfür verwendeten Mechanismen können den oben angeführten Artikeln entnommen werden.

Es ist auch möglich, für diese Kommunikation andere Protokolle für Datennetze zu verwenden, beispielsweise das X.25 Protokoll. Hierbei ist zu bedenken, daß für diesen Nachrichtenaustausch nur eine geringe Bandbreite benötigt wird.

Die Kommunikationseinrichtung KOM3 stellt die für die Übertragung von Daten an das Dienstunterstützungssystem IP1 benötigten Kommunikationsdienste zur Verfügung. Die Übertragung erfolgt hierbei über ein auf ATM basierendes Übertragungsnetz, mittels dem es möglich ist, große Datenmengen in kurzer Zeit zu übertragen.

Es ist auch möglich, andere Übertragungsnetze mit ähnlichen Eigenschaften zu verwenden, also beispielsweise für die Rechner-Rechner-Kommunikation verwendete Netze nach dem DQDB-(Distributed Queue Dual Bus) oder Token-Verfahren oder ein Router-Netz. Auch die Verwendung von schmalbandigeren Netzen, beispielsweise eines ISDN-Netzes (ISDN = Integrated Services Digital Network) oder eines Netzes nach dem X.25 Protokoll, ist möglich.

Die Dienstelogika SCONTR1 bis SCONTR3 stellen jeweils die für die Durchführung eines Dienstes notwendigen Funktionen zur Verfügung. Die Zahl der von der Dienststeuereinrichtung SCP1 bereitgestellten Dienste und damit die Zahl der Dienstelogika ist beispielhaft gewählt. So ist beispielsweise die Dienstelogik SCONTR1 für einen Dienst "Einheitliche Rufnummer", die Dienstelogik SCONTR2 für einen Dienst "Virtuelles privates Netz" und die Dienstelogik SCONTR3 für einen Dienst "Kiosk-Dienst" verantwortlich. Die hierfür notwendigen Funktionen und die für die Bereitstellung dieser Funktionen notwendigen Mittel können beispielsweise dem oben angeführten Artikel "Eigenschaften intelligenter Netze" entnommen werden.

Darüberhinaus sind weitere Funktionen in die Dienstelogika SCONTR1 bis SCONTR3 integriert. Sie tauschen Nachrichten mit der Ladesteuerung LOAD1 aus, mittels der sie die Ladesteuerung LOAD1 informieren, wenn die ihnen entsprechenden Dienste aktiviert oder deaktiviert werden und mittels der sie von der Ladesteuerung LOAD1 informiert werden, ob die den Diensten zugeordneten Sprachansagen und Ansagetexte zur Verfügung stehen.

Bei der Datenbasis DB handelt es sich um einen oder mehrere Massenspeicher, beispielsweise um mehrere Festplattenlaufwerke. In der Datenbasis DB sind alle Sprachansagen und Ansagetexte in digitaler Form kodiert gespeichert, die von den von den Dienstelogika SCONTR1 bis SCONTR3 erbrachten Diensten verwendet werden.

Es ist hierbei auch möglich, daß die Datenbasis DB kein Bestandteil der Dienststeuereinrichtung SCP1 ist. Die Datenbasis DB kann auch Bestandteil einer separaten Datenbank sein, auf die die Dienststeuereinrichtung SCP1 über das INAP-Protokoll oder ein Datennetz, beispielsweise ein LAN (Local Area Network) zugreift. Auf eine solche Datenbank kann auch von mehreren Dienststeuereinrichtungen aus zugegriffen werden, womit es sich so um eine zentrale Datenbank handeln würde.

Es ist vorteilhaft, die den Dienstelogika SCONTR1 bis SCONTR3 entsprechende Steuerprogramme zusammen mit den von den Diensten verwendeten Sprachansagen und Ansagetexte in der Datenbasis DB entsprechend einer Datenstruktur abzuspeichern, die die von einem Dienst verwendeten Sprachansagen und Ansagetexte den Steuerprogrammen zuordnet, deren Durchführung der Steuerlogik des Dienstes entspricht. Hierdurch ist es möglich, daß der Betreiber eines Dienstes zugleich Zugriff auf den Ablauf seines Dienstes und die von seinem Dienst verwendeten Sprachansagen und Ansagetexte hat.

Wenn die von den Dienstelogika SCONTR1 bis SCONTR3 bereitgestellten Dienste Dienste ein und desselben Netzbetreibers sind, ist es weiter vorteilhaft, daß die Datenbasis DB Bestandteil der Dienststeuereinrichtung SCP1 ist. Damit unterliegen ebenfalls sowohl der Ablauf eines Dienstes als auch die verwendeten Sprachansagen und Ansagetexte dem Einfluß des Dienstbetreibers.

Die Ladesteuerung LOAD1 verwaltet die von den Diensten der Dienststeuereinrichtung SCP1 verwendeten Sprachansagen und Ansagetexte und stellt sicher, daß die von einem Dienst der Dienststeuereinrichtung SCP1 benötigten Sprachansagen und Ansagetexte in demjenigen der Dienstunterstützungssysteme IP1 bis IP3 bereitstehen, das derjenigen Dienstvermittlungsstelle zugeordnet ist, die den Dienst aktiviert.

Empfängt sie von einer der Dienstelogika SCONTR1 bis SCONTR3 eine Nachricht, die die Aktivierung dieser Dienstelogik durch eine Dienstvermittlungsstelle anzeigt, so bestimmt sie die dieser Dienstelogik zugeordneten Sprachansagen und Anzeigetexte, liest sie aus der Datenbasis DB aus und sendet diesen Datensatz über die Kommunikationseinrichtung KOM3 an das der aktivierenden Dienstvermittlungsstelle zugeordnete Dienstunterstützungssystem, hier das Dienstunterstützungssystem IP1. Paralell dazu sendet sie über die Kommunikationseinrichtung KOM2 Steuernachrichten an dieses Dienstunterstützungssystem, die diesem anzeigen, daß Vorbereitungen für den Empfang und das Abspeichern von Sprachansagen und Ansagetexten zu treffen sind.

Es ist auch möglich, daß der Datensatz zusammen mit den Steuernachrichten mittels eines gemeinsamen Protokolls übertragen wird.

Empfängt sie von einer der Dienstelogika eine Nachricht, die die Deaktivierung dieser Dienstelogik anzeigt, so sendet sie über die Kommunikationseinrichtung KOM2 Steuernachrichten an das Dienstunterstützungssystem IP1, die dieses anweisen, die dieser Dienstelogik zugeordneten Sprachansagen und Ansagetexte aus dem Speicher zu löschen, und die das Dienstunterstützungssystem IP1 für andere Dienste freigibt.

Es ist auch möglich, daß die Ladesteuerung LOAD1 mit Funktionen ausgestattet ist, deren Ziel eine Minimierung des Datenrtransfers zwischen der Dienststeuereinrichtung SCP1 und dem Dienstunterstützungssystem IP1 ist.

Beispielsweise kann auf das generelle Löschen des die Sprachansagen und Ansagetexte eines Dienstes enthaltenden Datensatzes bei Deaktivierung des Dienstes verzichtet werden. Die Ladesteuerung LOAD1 würde so in einer Liste vermerken, welche Datensätze für welche Dienste in welche der Dienstunterstützungssysteme bereits abgespeichert sind. Würde so ein Dienst aktiviert, so würde anhand dieser Liste überprüft, ob der entsprechende zugehörige Datensatz bereits in dem Dienstunterstützungssystem abgespeichert ist, das der aktivierenden Dienstvermittlungsstelle zugordnet ist. Nur wenn dies nicht der Fall ist, würde der Datensatz dann noch in dieses Dienstunterstützungssystem geladen.

Die Verwendung solch einer Liste ist ebenfalls vorteilhaft, wenn die paralelle Erbringung von Diensten für mehrere Teilnehmer durch die Dienstvermittlungstelle SCP1 und das Dienstunterstützungssystem IP1 möglich ist.

Wenn die Ladesteuerung LOAD1 über die Kommunikationseinrichtung KOM2 von dem Dienstunterstützungssystem IP1 eine Nachricht empfangen würde, daß kein Speicherplatz mehr für das Abspeichern eines weiteren Datensatzes bereitsteht, so würde die Ladesteuerung LOAD1 einen der in dem Dienstunterstützungssystem IP1 abgespeicherten Datensätze auswählen und durch das Senden einer Steuernachricht an das Dienstunterstützungssystem dessen Löschung veranlassen. Als Auswahlkriterium kann hierbei dienen, denjenigen Datensatz zu löschen, der bereits am längsten in dem Dienstunterstützungssystem IP1 abgespeichert ist, dessen zugeordneter Dienst am wenigsten häufig aktiviert wurde oder der die wenigsten Daten enthält.

Es ist auch möglich, daß die Auswahl des zu löschenden Datensatzes von dem Dienstunterstützungssystem IP1 vorgenommen wird.

Das Dienstunterstützungssystem IP1 enthält drei Kommunikationseinrichtungen KOM4 bis KOM6, eine Steuerung CONTR, eine Ladesteuerung LOAD2, eine Speichereinrichtung MEM und einen Dekodierer DECODE. Die Ladesteuerung LOAD2 tauscht Daten mit den Kommunikationseinrichtungen KOM1 und KOM2 und mit der Speichereinrichtung MEM aus. Die Steuereinrichtung CONTR tauscht Daten mit der Kommunikationseinrichtung KOM4 und dem Dekodierer DECODE aus. Der Dekodierer DECODE liest Daten aus der Speichereinrichtung MEM aus und sendet Daten an die Kommunikationseinrichtung KOM6. Die Kommunikationseinrichtungen KOM4 und KOM5 tauschen Daten mit den Kommunikationseinrichtungen KOM2 und KOM3 aus.

Die Kommunikationseinrichtungen KOM4 und KOM5 sind wie die Kommunikationseinrichtungen KOM2 bzw. KOM3 ausgestaltet.

Die Kommunikationseinrichtung KOM6 stellt eine Verbindung mit der Dienstvermittlungsstelle SSP1 über mindestens einen Nutzkanal und mindestens einen Signalisierungskanal bereit. Über diese Kanäle können Ansagetexte oder Sprachansagen an Teilnehmer des Kommunikationsnetzes KN1 gesendet werden.

Bei der Speichereinrichtung MEM handelt es sich um den Arbeitsspeicher oder einen Massenspeicher des das Dienstunterstützungssystem IP1 bildenden Rechnersystems.

Der Dekodierer DECODE erzeugt aus einer in der Speichereinrichtung MEM in dekodierter digitaler Form abgespeicherten Sprachansage ein entsprechendes Sprach-Signal und sendet dieses Sprach-Signal über die Kommunikationseinrichtung KOM6 an die Dienstvermittlungsstelle SSP1. Ebenso verfährt er mit einem abgespeicherten Ansagetext, den er über eine ISDN-Signalisierungskanal (ISDN=Integrated Services Digital Network) in dem hierfür notwendigen Datenformat an die Dienstvermittlungsstelle SSP1 sendet.

Die Steuerung CONTR ist für die Steuerung des Dienstunterstützungssystems IP1 zuständig. Hierfür empfängt sie insbesonders Anforderungsnachrichten von der Dienststeuereinrichtung SCP1, die sie anweist, bestimmte Sprachansagen oder Ansagetexte über die Dienstvermittlungstelle SSP1 an einen Teilnehmer des Kommunikationsnetzes KN1 zu senden. Sie veranlaßt daraufhin die Dekodiereinrichtung DECODE, diese Sprachansagen oder Ansagetexte auszulesen, zu dekodieren und an die Dienstvermittlungsstelle SSP1 zu senden.

Details zur Ausgestaltung obiger Komponenten des Dienstunterstützungssystems IP1 können beispielsweise dem oben angeführten Artikel "Voice services on the intelligent network: intelligent peripherals and service nodes" entnommen werden.

Die Ladesteuerung LOAD2 arbeitet mit der Ladesteuerung LOAD1 zusammen und erfüllt die bereits dort angeführten, von Seiten des Dienstunterstützungssystems IP1 zu erfüllenden Ladefunktionen. Dieses Funktionen sind insbesondere das Abspeichern von über die Kommunikationseinrichtung KOM5 empfangenen Datensätzen in der Speichereinrichtung sowie das Verwalten und das Löschen der Datensätze aus der Speichereinrichtung MEM.

## Patentansprüche

1. Verfahren zur Bereitstellung von Nachrichten zur Teilnehmerinformation für Dienste eines Kommunikationsnetzes (KN1), wobei bei dem Verfahren von einer Dienststeuereinrichtung (SCP1, SCP2) eine Anforderungsnachricht an ein Dienstunterstützungssystem (IP1 bis IP3) gesendet wird und das Dienstunterstützungssystem (IP1 bis IP3) auf den Empfang der Anforderungsnachricht eine in einer Speichereinrichtung (MEM) des Dienstunterstützungssystems (IP1 bis IP3) gespeicherte Nachricht zur Teilnehmerinformation ausliest und an einen Teilnehmer (A) des Kommunikationsnetzes (KN1) sendet,
**dadurch gekennzeichnet, daß** die Nachrichten zur Teilnehmerinformation zentral von der Dienststeuereinrichtung (SCP1, SCP2) verwaltet werden, wobei von einem Dienst verwendete Nachrichten zur Teilnehmerinformation jeweils einer zugehörigen Dienstelogik (SCONTR1 bis SCONTR3) zugeordnet werden, daß, wenn durch den Empfang einer Nachricht von einer Dienstvermittlungsstelle (SSP1 bis SSP3) eine einem Dienst zugeordnete Dienstelogik (SCONTR1 bis SCONTR3) aktiviert wird, Nachrichten zur Teilnehmerinformation, die diesem Dienst zugeordnet sind, von der Dienststeuereinrichtung (SCP1, SCP2) in das Dienstunterstützungssystem (IP1 bis IP3) geladen werden und in der Speichereinrichtung (MEM) des Dienstunterstützungssystems (IP1 bis IP3) abgespeichert werden und daß eine derart in das Dienstunterstützungssystem (IP1 bis IP3) geladene Nachricht zur Teilnehmerinformation auf den Empfang der von der Dienststeuereinrichtung (SCP1, SCP2) gesendeten Anforderungsnachricht hin ausgelesen und an einen Teilnehmer (A) des Kommunikationsnetzes (KN1) gesendet wird.

2. Verfahren nach Anspruch 1, **dadurch gekennzeichnet, daß** die Nachrichten zur Teilnehmerinformation zentral in einer Datenbank (DB) der Dienststeuereinrichtung (SCP1, SCP2) abgespeichert werden.

3. Verfahren nach Anspruch 1, **dadurch gekennzeichnet, daß**, wenn durch den Empfang einer Nachricht von einer Dienstvermittlungsstelle (SSP1) eine einem Dienst zugeordnete Dienstelogik aktiviert wird, die Dienststeuereinrichtung (SCP1, SCP2) alle Nachrichten zur Teilnehmerinformation bestimmt, die diesem Dienst zugeordnet sind, und all diese Nachrichten zur Teilnehmerinformation von der Dienststeuereinrichtung (SCP1, SCP2) in das Dienstunterstützungssystem (IP1 bis IP3) geladen werden.

4. Verfahren nach Anspruch 1, **dadurch gekennzeichnet, daß**, wenn durch den Empfang einer Nachricht von einer Dienstvermittlungsstelle (SSP1) eine einem Dienst zugeordnete Dienstelogik aktiviert wird, geprüft wird, ob die von dem Dienst verwendeten Nachrichten zur Teilnehmerinformation bereits in einem der Dienstvermittlungsstelle (SSP1) zugeordneten Dienstunterstützungssystem (IP1) abgespeichert sind und, wenn dies nicht zutrifft, diese Nachrichten zur Teilnehmerinformation in dieses Dienstunterstützungssystem (IP1) geladen werden.

5. Verfahren nach Anspruch 1, **dadurch gekennzeichnet, daß** die Nachrichten zur Teilnehmerinformation über ein Breitbandnetz von der Dienststeuereinrichtung (SCP1, SCP2) in das Dienstunterstützungssystem (IP1 bis IP3) geladen werden.

6. Dienststeuereinrichtung (SCP1) mit einer Kommunikationseinrichtung (KOM2 + KOM3) zur Kommunikation mit mindestens einer ein Dienstunterstützungssystem (IP1) enthaltenden Dienstzugangseinrichtung (SA1) und mit mindestens einer Dienstelogik (SCONTR1 bis SCONTR3), die so ausgestaltet ist, daß sie, um Nachrichten zur Teilnehmerinformation an Teilnehmer zu senden, entsprechende Anforderungsnachrichten an das Dienstunterstützungssystem (IP1) sendet,
**dadurch gekennzeichnet, daß** die Dienststeuereinrichtung (SCP1) mit einer Ladeeinrichtung (LOAD1) versehen ist, die so ausgestaltet ist, daß sie die Nachrichten zur Teilnehmerinformation zentral verwaltet, wobei von einem Dienst verwendete Nachrichten zur Teilnehmerinformation jeweils einer zugehörigen Dienstelogik (SCONTR1 bis SCONTR3) zugeordnet sind, daß die Ladeeinrichtung (LOAD1) weiter so ausgestaltet ist, daß, wenn durch den Empfang einer Nachricht von einer Dienstvermittlungsstelle (SSP1 bis SSP3) eine einem Dienst zugeordnete Dienstelogik (SCONTR1 bis SCONTR3) aktiviert wird, sie Nachrichten zur Teilnehmerinformation, die diesem Dienst zugeordnet sind, in das Dienstunterstützungssystem (IP1 bis IP3) zur Abspeicherung in einer Speichereinrichtung (MEM) des Dienstunterstützungssystems (IP1 bis IP3) lädt, und daß die mindestens eine Dienstelogik (SCONTR1 bis SCONTR3) weiter so ausgestaltet ist, daß sie eine Anforderungsnachrichten an das Dienstunterstützungssystem (IP1) sendet, eine derart in das Dienstunterstützungssystem (IP1 bis IP3) geladene Nachricht zur Teilnehmerinformation an einen Teilnehmer (A) des Kommunikationsnetzes (KN1) zu senden.

7. Dienstunterstützungssystem (IP1) mit einer Kommunikationseinrichtung (KOM4 + KOM5), die zur Kommunikation mit mindestens einer Dienststeuereinrichtung (SCP1) dient, mit einer Speichereinrichtung (MEM) zum Speichern von Nachrichten zur Teilnehmerinformation und mit einer Steuerung (CONTR), die so ausgestaltet ist, daß sie auf eine Anforderungsnachricht von der Dienststeuereinrichtung (SCP1) das Senden einer Nachricht zur Teilnehmerinformation an einen Teilnehmer (A) veranlaßt,
**dadurch gekennzeichnet, daß** das Dienstunterstützungssystem (IP1) mit einer Ladeeinrichtung (LOAD1) versehen ist, die so ausgestaltet ist, daß sie von der Dienststeuereinrichtung (SCP1) empfangene Nachrichten zur Teilnehmerinformation in der Speichereinrichtung (MEM) abspeichert und eine derart in das Dienstunterstützungssystem (IP1 bis IP3) geladene Nachricht zur Teilnehmerinformation auf den Empfang einer von der Dienststeuereinrichtung (SCP1, SCP2) gesendeten Anforderungsnachricht hin ausliest und an einen Teilnehmer (A) des Kommunikationsnetzes (KN1) sendet.

8. Dienstzugangseinrichtung (SA1 bis SA3) mit einer oder mit mehreren Dienstvermittlungsstellen (SSP1 bis SSP3) und mit mindestens einem Dienstunterstützungssystem (IP1 bis IP3), das mit mindestens einer der Dienstvermittlungsstellen (SSP1 bis SSP3) verbunden ist,
**dadurch gekennzeichnet**, daßdas Dienstunterstützungssystem (IP1 bis IP3) ein Dienstunterstützungssystem nach Anspruch 7 ist.

9. Dienstvermittlungsstelle,
**dadurch gekennzeichnet**, daßein Dienstunterstützungssystem nach Anspruch 7 in die Dienstvermittlungsstelle integriert ist.

10. Dienstesystem (SS),
**dadurch gekennzeichnet, daß** das Dienstesystem (SS) mit mindestens einer Dienststeuereinrichtung nach Anspruch 6 und mindestens einem Dienstunterstützungssystem nach Anspruch 7 versehen ist.

## Claims

1. Method of providing subscriber information messages for services in a communications network (KN1), a request message being sent in the method by a service control device (SCP1, SCP2) to a service support system (IP1 to IP3) and the service support system (IP1 to IP3) reading out on reception of the request message a subscriber information message stored in a memory device (MEM) of the service support system (IP1 to IP3) and sending it to a subscriber (A) of the communications network (KN1), **characterized in that** the subscriber information messages are managed centrally by the service control device (SCP1, SCP2), subscriber information messages used by a service each being assigned to associated services logic (SCONTR1 to SCONTR3), **in that**, if a services logic (SCONTR1 to SCONTR3) assigned to a service is activated by the reception of a message by a service switching centre (SSP1 to SSP3), subscriber information messages assigned to said service are loaded into the service support system (IP1 to IP3) by the service control device (SCP1, SCP2) and are stored in the memory device (MEM) of the service support system (IP1 to IP3), and **in that** a subscriber information message loaded in this way into the service support system (IP1 to IP3) is read out on reception of the request message sent by the service control device (SCP1, SCP2) and is sent to a subscriber (A) of the communications network (KN1).

2. Method according to Claim 1, **characterized in that** the subscriber information messages are stored centrally in a database (DB) of the service control device (SCP1, SCP2).

3. Method according to Claim 1, **characterized in that** if a services logic assigned to a service is activated by the reception of a message from the service switching centre (SSP1), the service control device (SCP1, SCP2) determines all the subscriber information messages that are assigned to said service and all said subscriber information messages are loaded into the service support system (IP1 to IP3) by the service control device (SCP1, SCP2).

4. Method according to Claim 1, **characterized in that**, if a services logic assigned to a service is activated by the reception of a message by the service switching centre (SSP1), a check is made as to whether the subscriber information messages used by the service are already stored in a service support system (IP1) assigned to the service switching centre (SSP1) and, if this is not the case, said subscriber information messages are loaded into said service support system (IP1).

5. Method according to Claim 1, **characterized in that** the subscriber information messages are loaded into the service support system (IP1 to IP3) via a broad-band network by the service control device (SCP1, SCP2).

6. Service control device (SCP1), comprising a communication device (KOM2 + KOM3) for communication with at least one service access device (SA1) containing a service support system (IP1) and comprising at least one services logic (SCONTR1 to SCONTR3) that is configured in such a way that, in order to send subscriber information messages to subscribers, it sends appropriate request messages to the service support system (IP1), **characterized in that** the service control device (SCP1) is provided with a loading device (LOAD1) that is configured in such a way that it manages the subscriber information messages centrally, subscriber information messages used by a service each being assigned to an associated services logic (SCONTR1 to SCONTR3), **in that** the loading device (LOAD1) is furthermore configured in such a way that, if a services logic (SCONTR1 to SCONTR3) assigned to a service is activated by the reception of a message by a service switching centre (SSP1 to SSP3), it loads subscriber information messages assigned to said service into the service support system (IP1 to IP3) for storage in a memory device (MEM) of the service support system (IP1 to IP3), and **in that** the at least one services logic (SCONTR1 to SCONTR3) is furthermore configured in such a way that it sends a request message to the service support system (IP1) to send a subscriber information message loaded in this way into the service support system (IP1 to IP3) to a subscriber (A) of the communications network (KN1).

7. Service support system (IP1), comprising a communication device (KOM4 + KOM5) that serves to communicate with at least one service control device (SCP1), comprising a memory device (MEM) for storing subscriber information messages and comprising a control (CONTR) that is configured in such a way that, in response to a request message by the service control device (SCP1), it initiates the sending of a subscriber information message to a subscriber (A), **characterized in that** the service support system (IP1) is provided with a loading device (LOAD1) that is configured in such a way that it stores subscriber information messages received by the service control device (SCP1) in the memory device (MEM) and reads out a subscriber information message loaded in this way into the service support system (IP1 to IP3) on reception of a request message sent by the service control device (SCP1, SCP2) and sends it to a subscriber (A) of the communications network (KN1).

8. Service access device (SA1 to SA3), comprising one or comprising a plurality of service switching centres (SSP1 to SSP3) and comprising at least one service support system (IP1 to IP3) that is connected to at least one of the service switching centres (SSP1 to SSP3), **characterized in that** the service support system (IP1 to IP3) is a service support system according to Claim 7.

9. Service switching centre, **characterized in that** a service support system according to Claim 7 is incorporated in the service switching centre.

10. Services system (SS) **characterized in that** the services system (SS) is provided with at least one service control device according to Claim 6 and at least one service support system according to Claim 7.

## Revendications

1. Procédé d'élaboration et de mise à disposition d'informations destinées à informer un abonné pour des services d'un réseau de communications (KN1), d'après lequel une information de demande est émise par un dispositif de commande de services (SCP1, SCP2) à un système d'assistance de services (IP1 à IP3) et le système d'assistance de services (IP1 à IP3), en réponse à la réception de l'information de demande, lit une information destinée à informer l'abonné, mémorisée dans un dispositif de mémoire (MEM) du système d'assistance de services (IP1 à IP3), et l'émet à un abonné (A) du réseau de communications (KN1),
**caractérisé en ce que** les informations destinées à informer l'abonné sont gérées de manière centralisée par le dispositif de commande de services (SCP1, SCP2), des informations destinées à informer l'abonné utilisées par un service étant affectées respectivement à une logique de services associée (SCONTR1 à SCONTR3), **en ce que** lorsqu'une logique de services (SCONTR1 à SCONTR2) associée à un service est activée, des informations destinées à informer l'abonné, qui sont affectées à ce service, sont chargées par le dispositif de commande de services (SCP1, SCP2) dans le système d'assistance de services (IP1 à IP3) et sont mémorisées dans le dispositif de mémoire (MEM) du système d'assistance de services (IP1 à IP3), et **en ce qu'**une information destinée à informer l'abonné, ainsi chargée dans le système d'assistance de services (IP1 à IP3), est lue en réponse à la réception de l'information de demande émise par le dispositif de commande de services (SCP1, SCP2), et est envoyée à un abonné (A) du réseau de communications (KN1).

2. Procédé selon la revendication 1, **caractérisé en ce que** les informations destinées à informer l'abonné sont mémorisées de manière centralisée, dans une banque de données (DB) du dispositif de commande de services (SCP1, SCP2).

3. Procédé selon la revendication 1, **caractérisé en ce que** lorsque suite à la réception d'une information d'un central de services (SSP1), une logique de service affectée à un service, est activée, le dispositif de commande de services (SCP1, SCP2) détermine toutes les informations destinées à informer l'abonné, qui sont associées à ce service, et toutes ces informations destinées à informer l'abonné sont chargées par le dispositif de commande de services (SCP1, SCP2) dans le système d'assistance de services (IP1 à IP3).

4. Procédé selon la revendication 1, **caractérisé en ce que** lorsque suite à la réception d'une information d'un central de services (SSP1), une logique de service affectée à un service, est activée, on vérifie si les informations destinées à informer l'abonné, utilisées par le service, sont déjà mémorisées dans un système d'assistance de services (IP1) associé au central de services (SSP1), et, si cela n'est pas le cas, ces informations destinées à informer l'abonné, sont chargées dans ce système d'assistance de services (IP1).

5. Procédé selon la revendication 1, **caractérisé en ce que** les informations destinées à informer l'abonné sont chargées par le dispositif de commande de services (SCP1, SCP2) dans le système d'assistance de services (IP1 à IP3), par l'intermédiaire d'un réseau à large bande.

6. Dispositif de commande de services (SCP1) avec un dispositif de communication (KOM2+KOM3) pour communiquer avec au moins un dispositif d'accès aux services (SA1) renfermant un système d'assistance de services (IP1) et avec au moins une logique de services (SCONTR1 à SCONTR3), qui est configuré de façon telle, que pour émettre des informations destinées à informer l'abonné à des abonnés, il émet des informations de demande correspondantes au système d'assistance de services (IP1), **caractérisé en ce que** le dispositif de commande de services (SCP1) est pourvu d'un dispositif de chargement (LOAD1) qui est d'une configuration telle, qu'il gère de manière centralisée les informations destinées à informer l'abonné, des informations destinées à informer l'abonné utilisées par un service étant affectées respectivement à une logique de services associée (SCONTR1 à SCONTR3), **en ce que** le dispositif de chargement (LOAD1) est par ailleurs configuré de manière à ce que lorsque suite à la réception d'une information d'un central de services (SSP1 à SSP3), une logique de service (SCONTR1 à SCONTR3) affectée à un service, est activée, il charge des informations destinées à informer l'abonné, qui sont associées à ce service, dans le système d'assistance de services (IP1 ) IP3) pour la mémorisation dans le dispositif de mémoire (MEM) du système d'assistance de services (IP1 à IP3), et **en ce que** ladite au moins une logique de services (SCONTR1 à SCONTR3) est par ailleurs configurée de façon à émettre une information de demande au système d'assistance de services (IP1) en vue d'émettre une information destinée à informer les abonnées ainsi chargée dans le système d'assistance de services (IP1 à IP3), à un abonné (A) du réseau de communications (KN1).

7. Système d'assistance des services (IP1) avec un dispositif de communications (KOM4+KOM5) qui sert à communiquer avec au moins un dispositif de commande de services (SCP1), avec un dispositif de mémoire (MEM) pour la mémorisation d'informations destinées à informer les abonnés, et avec une commande (CONTR) qui est configurée de façon à produire, en réponse à une information de demande du dispositif de commande de services (SCP1), l'émission vers un abonné (A), d'une information destinée à informer les abonnés, **caractérisé en ce que** le système d'assistance de services (IP1) est pourvu d'un dispositif de chargement (LOAD1) qui est configuré de façon à mémoriser dans le dispositif de mémoire (MEM), des informations destinées à informer les abonnés reçues par le dispositif de commande de services (SCP1), et à lire une information destinée à informer l'abonné ainsi chargée dans le système d'assistance de services (IP1 à IP3) en réponse à la réception de l'information de demande émise par le dispositif de commande de services (SCP1, SCP2), et à l'envoyer à un abonné (A) du réseau de communications (KN1).

8. Dispositif d'accès aux services (SA1 à SA3) avec un ou plusieurs centraux de services (SSP1 à SSP3) et avec au moins un système d'assistance de services (IP1 à IP3) qui est relié à l'un au moins des centraux de services (SSP1 à SSP3), **caractérisé en ce que** le système d'assistance de services (IP1 à IP3) est un système d'assistance de services selon la revendication 7.

9. Central de services, **caractérisé en ce qu'**un système d'assistance de services selon la revendication 7 est intégré au central de services.

10. Système de services (SS), **caractérisé en ce que** le système de services (SS) est équipé d'au moins un dispositif de commande de services selon la revendication 6, et d'au moins un système d'assistance de services selon la revendication 7.
